# EUROPEAN PATENT SPECIFICATION

(11) **EP 2 637 238 B1**
(45) Date of publication and mention of the grant of the patent: **24.04.2019**
(21) Application number: 13158449.2
(22) Date of filing: 08.03.2013
(51) Int. Cl.: H01M 4/04, H01M 4/66

(54) **Rechargeable battery and battery module**
Wiederaufladbare Batterie und Batteriemodul
Batterie rechargeable et module de batterie

(30) Priority: 08.03.2012 US 201261608281 P; 07.02.2013 US 201313761527
(43) Date of publication of application: 11.09.2013
(73) Proprietor: SAMSUNG SDI CO., LTD., Yongin-si, Gyeonggi-do (KR); ROBERT BOSCH GMBH, 70442 Stuttgart (DE)
(72) Inventor: JEONG, Dong-Ho, Gyeonggi-do (KR)
(74) Representative: Mounteney, Simon James

(56) References cited:
- EP-A1- 2 202 828
- EP-A1- 2 239 806
- EP-A2- 1 249 880
- EP-A2- 2 421 075

## Description

### BACKGROUND

### 1. Field

Embodiments relate to a rechargeable battery.

### 2. Description of the Related Art

Unlike a primary battery that is incapable of being recharged, a rechargeable battery may be repeatedly charged and discharged. A low-capacity rechargeable battery may be used for a small portable electronic device, e.g., a mobile phone, a laptop computer, and/or a camcorder. A large-capacity battery may be used as a power supply for, e.g., driving a motor of a hybrid vehicle or the like.

A large-capacity and high power rechargeable battery using a non-aqueous electrolyte of high energy density has been considered. The high power rechargeable batteries may be connected to each other in series or in parallel to configure a high power and large capacity battery module.

The rechargeable battery may include an electrode assembly including a positive electrode, a negative electrode, and a separator interposed between the positive electrode and the negative electrode. The positive electrode and the negative electrode may each have a structure in which an active material is coated on a current collector formed of metal, and on the current collector, a coated region coated with the active material and an uncoated region without the active material are formed.

The above information disclosed in this Background section is only for enhancement of understanding of the background of the described technology and therefore it may contain information that does not form the prior art that is already known to a person of ordinary skill in the art.

EP 2 421 075 A2 relates to a battery electrode sheet and manufacturing method thereof wherein drawn regions are created in uncoated portions of the electrode sheet.

EP 1 249 880 relates to a method for manufacturing an electrode using a pressurized method.

### SUMMARY

The embodiments may be realized by providing a rechargeable battery including an electrode assembly, the electrode assembly including a first electrode, a second electrode, and a separator between the first electrode and the second electrode; and a case accommodating the electrode assembly, wherein each of the first and second electrodes includes a coated region having an active material layer on a current collector and an uncoated region free of the active material layer, and in at least one electrode of the first and second electrodes, the current collector is characterized by an x-ray diffraction pattern in which a ratio of the FWHM of a largest peak:the FWHM of a second largest peak of the current collector in the uncoated region is greater than a ratio of the FWHM of a largest peak:the FWHM of a second largest peak of the current collector in the coated region:
Accordingly, a first aspect of the present invention provides an electrode for a rechargeable battery, the electrode comprising a current collector having a coated region and an uncoated region adjacent the coated region, wherein in the coated region an active material layer is provided on the current collector and in the uncoated region the collector is free of the active material layer, wherein the current collector is characterized by an x-ray diffraction pattern in which a ratio of the FWHM of a largest peak:the FWHM of a second largest peak of the current collector in the uncoated region is greater than a ratio of the FWHM of a largest peak:the FWHM of a second largest peak of the current collector in the coated region, wherein the uncoated region is a hammered region.

In a second aspect, the present invention provides an electrode assembly comprising a first electrode, a second electrode, and a separation between the first electrode and the second electrode, wherein at least one of the first and/or second electrodes is an electrode as described above.

In a third aspect, the present invention provides a rechargeable battery comprising an electrode assembly as described above, a case having space to house the electrode assembly and cap plate covering an opening to the case.

In a further aspect, the present invention provides a method of fabricating an electrode, the method comprising:
providing a sheet-like current collector;
coating a region of the current collector with an active material layer to form a coated region and an uncoated region; and
hammering the uncoated region,
wherein the current collector is characterized by an x-ray diffraction pattern in which a ratio of the FWHM of a largest peak:the FWHM of a second largest peak of the current collector in the uncoated region is greater than a ratio of the FWHM of a largest peak:the FWHM of a second largest peak of the current collector in the coated region.

At least some of the above and other features of the invention are set out in the claims.

### BRIEF DESCRIPTION OF THE DRAWINGS

The following description set out to illustrate embodiments of the present invention with reference to the attached drawings in which:
FIG. 1 illustrates a perspective view of a rechargeable battery according to an embodiment.
FIG. 2 illustrates a cross-sectional view taken along line II-II of FIG. 1.
FIG. 3 illustrates a perspective view of a negative electrode according to an embodiment.
FIG. 4 illustrates a graph showing thicknesses of a negative coated region and a negative uncoated region according to an embodiment.
FIG. 5 illustrates a graph showing stretching ratios of a negative coated region and a negative uncoated region according to an embodiment.
FIG. 6A illustrates a graph showing an X-ray diffraction profile of a negative uncoated region according to an embodiment.
FIG. 6B illustrates a graph showing an X-ray diffraction profile of a negative coated region according to an embodiment.
FIG. 7 illustrates a perspective view of a positive electrode according to an embodiment.
FIG. 8 illustrates a diagram showing a fabricating method of an electrode according to an embodiment.
FIG. 9 illustrates a diagram showing a fabricating method of an electrode according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another element, it can be directly on the other element, or intervening elements may also be present. In addition, it will also be understood that when an element is referred to as being "between" two elements, it can be the only element between the two elements, or one or more intervening elements may also be present. Like reference numerals refer to like elements throughout.

According to an embodiment an electrode applied to a positive electrode or a negative electrode of a rechargeable battery is provided, the electrode including: a sheet type current collector and an active material layer coated on the current collector, in which the current collector includes a coated region (where the active material layer is formed) and an uncoated region (adjacent to the coated region and free of active material). The current collector in the uncoated region may have a thickness smaller than the current collector in the coated region.

According to another embodiment a fabricating method of an electrode is provided, including: vibration-hammering a preliminary uncoated region of a current collector (that includes a coated region where an active material layer is formed and the uncoated region free of active material).

According to yet another embodiment a rechargeable battery is provided, including: an electrode assembly including a first electrode and a second electrode; a case having a space housing the electrode assembly; and a cap plate covering an opening in the case. The first electrode may include a sheet type current collector and an active material layer coated on the current collector, the current collector including a coated region where the active material layer is formed and an uncoated region adjacent to the coated region and free of the active material layer. The current collector in the uncoated region may have a thickness smaller than the current collector in the coated region.

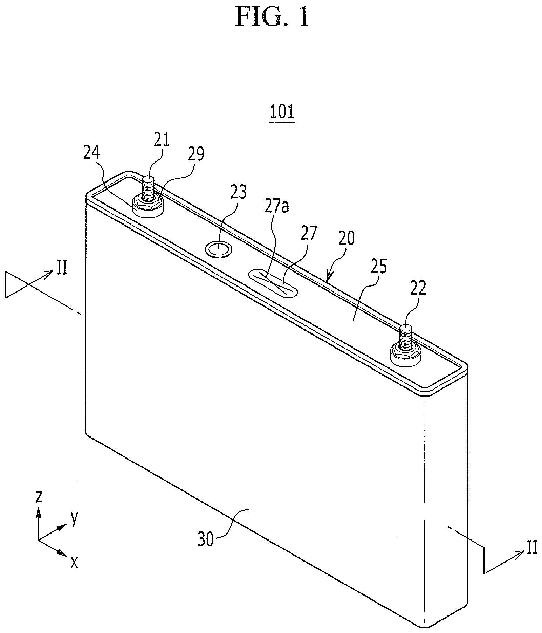

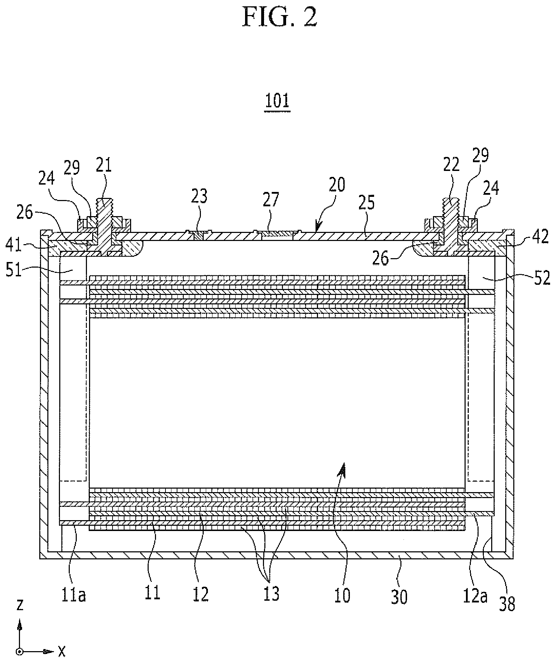

FIG. 1 illustrates a perspective view of a rechargeable battery according to an embodiment. FIG. 2 illustrates a cross-sectional view taken along line II-II of FIG. 1.

Referring to FIGS. 1 and 2, a rechargeable battery 101 according to an embodiment may include an electrode assembly 10 wound with a separator 13 interposed between a positive electrode (first electrode) 11 and a negative electrode (second electrode) 12, a case 30 (in which the electrode assembly 10 is embedded or accommodated), and a cap plate 25 coupled with an opening of the case 30.

The rechargeable battery 101 according to the present embodiment will be described using a lithium ion rechargeable battery having a square or hexahedral shape as an example. However, the embodiments are not limited thereto, and may be applied to various types of batteries, e.g., a lithium polymer battery, a cylindrical battery, or the like.

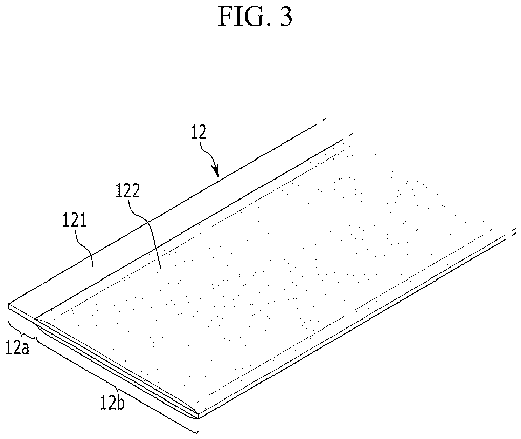

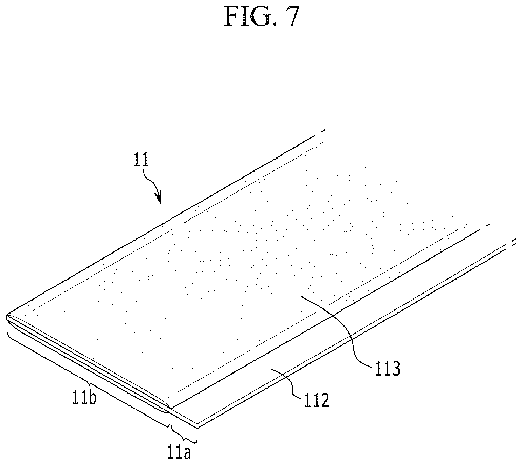

FIG. 3 illustrates a perspective view of a negative electrode according to an embodiment. FIG. 7 illustrates a perspective view of a positive electrode according to an embodiment.

As shown in FIGS. 3 and 7, the positive electrode 11 may include a positive current collector 112 (formed of, e.g., a thin metal foil) and a positive active material layer 113 (formed on the positive current collector 112). The negative electrode 12 may include a negative current collector 121 and a negative active material layer 122 formed on the negative current collector 121.

The positive current collector 112 may be formed in an elongated band shape and may include a positive coated region 11b (where the active material layer 113 is coated) and a positive uncoated region 11a (adjacent to the positive coated region 11b and free of active material). The negative current collector 121 may be formed in an elongated band shape and may include a negative coated region 12b (where the negative active material layer 122 is coated) and a negative uncoated region 12a (free of active material).

The positive uncoated region 11a may be formed on one side end of the positive current collector 112 along a lengthwise direction of the positive current collector 112. The negative uncoated region 12a may be formed on another side end of the negative current collector 121 along a lengthwise direction of the negative current collector 121.

The positive electrode 11 and the negative electrode 12 may be wound after a separator 13, e.g., an insulator, is interposed therebetween.

However, the embodiments are not limited thereto, and the electrode assembly may have a structure in which the positive electrode and the negative electrode (formed of a plurality of sheets) are stacked with the separator interposed therebetween.

The case 30 may have a substantially cuboid or hexahedral shape, and an opening may be formed at one surface or side thereof. The cap assembly 20 may include a cap plate 25 (covering the opening of the case 30), a positive terminal 21 (protruding outside the cap plate 25 and electrically connected to the positive electrode 11), a negative terminal 22 (protruding outside the cap plate 25 and electrically connected to the negative electrode 12), and a vent member 27 (having a notch 39a so as to be broken in response to a predetermined internal pressure).

The cap plate 25 may be formed of a thin metal plate and may be fixed to the case 30 at the opening thereof by, e.g., welding. An electrolyte injection opening (for injecting an electrolyte) may be formed at one side of the cap plate 25, and a sealing stopper 38 (that seals the electrolyte injection opening) may be fixed to the cap plate 25.

The positive terminal 21 may penetrate through the cap plate 25, and a first gasket 24 (disposed above) and a second gasket 26 (disposed below) may be installed between the cap plate 25 and the positive terminal 21 to insulate the cap plate 25 and the positive terminal 21.

The positive terminal 21 may have a cylindrical shape. A nut 29 (that supports the positive terminal 21 at an upper portion thereof) may be installed in the positive terminal 21, and a screw thread for coupling the nut 29 may be formed on an outer circumference of the positive terminal 21.

The positive terminal 21 may be electrically connected to the positive uncoated region 11a through a current collecting member 51 and a terminal flange (that supports the positive terminal 21 and the current collecting member 51) may be formed at a lower end of the positive terminal 21. Below the positive terminal 21, a lower insulating member 41 may insulate the positive terminal 21 and the cap plate 25.

The negative terminal 22 may penetrate through the cap plate 25, and a first gasket 24 (disposed above) and a second gasket 26 (disposed below) may be installed between the cap plate 25 and the negative terminal 22 to insulate the cap plate 25 and the negative terminal 21.

The negative terminal 22 may have a cylindrical shape. A nut 29 (that supports the negative terminal 22 at an upper portion thereof) may be installed in the negative terminal 22, and a screw thread for coupling the nut 29 may be formed on an outer circumference of the negative terminal 22.

The negative terminal 22 is electrically connected to the negative uncoated region 12a through a current collecting member 52 and a terminal flange (that supports the negative terminal 22 and the current collecting member 52) may be formed at a lower end of the negative terminal 22.

Below the negative terminal 22, a lower insulating member 42 may insulate the negative terminal 22 and the cap plate 25.

As shown in FIG. 3, the negative electrode 12 may include the negative current collector 121 and the negative active material layers 122 on surfaces of the negative current collector 121. For example, the negative current collector 121 may include a negative coated region 12b where active material is coated and a negative uncoated region 12a free of active material.

The negative current collector 121 may be formed of, e.g., copper or aluminum. The negative current collector 121 may have a plate shape that is elongated in one direction. The negative active material layer 122 may include, e.g., Li₄Ti₅O₁₂ or a carbon-based active material, a conductive agent, a binder, or the like. The negative active material layer 122 may be coated on the negative current collector 121 and attached by a lamination method.

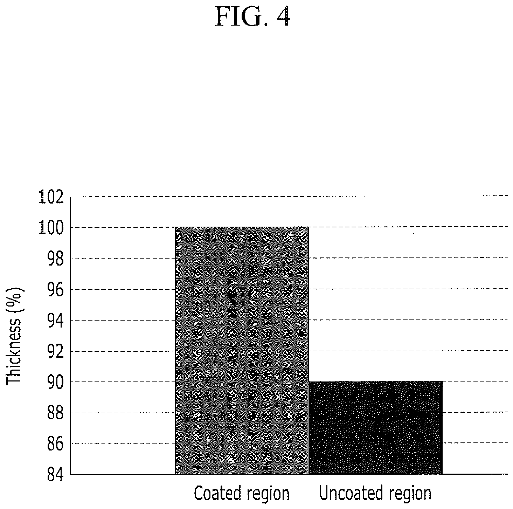

The negative uncoated region 12a may be stretched by hammering using vibrations. In an implementation, the negative uncoated region 12a may be stretched by hammering, e.g., using ultrasonic vibrations. As a result, as shown in FIG. 4, an average thickness of the negative current collector 121 in the negative uncoated region 12a may be smaller than that of the negative current collector 121 in the negative coated region 12b. For example, the average thickness of the negative current collector 121 in the negative uncoated region 12a may be about 80% to about 95% of that of the negative current collector 121 in the negative coated region 12b.

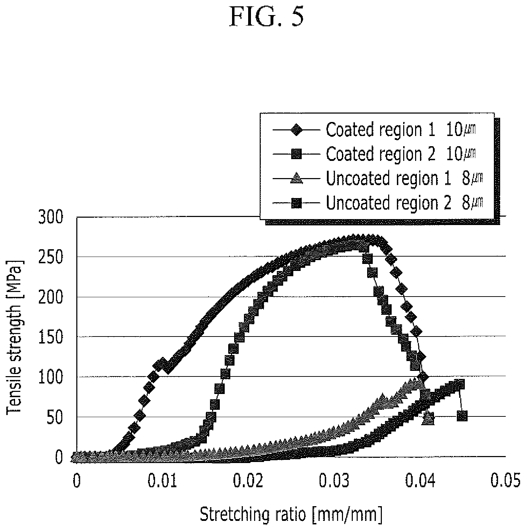

As shown in FIG. 5, when the average thickness of the negative current collector 121 in the negative uncoated region 12a is smaller than that of the negative current collector 121 in the negative coated region 12b, the engineering strain of the negative current collector 121 in the negative uncoated region 12a is increased such that the negative uncoated region 12a is stretched more by a small force. Therefore, in the process of pressing the negative current collector 121 in the negative coated region 12b, the negative current collector 121 in the negative uncoated region 12a may also be naturally stretched, thereby preventing the negative electrode 12 from being curved.

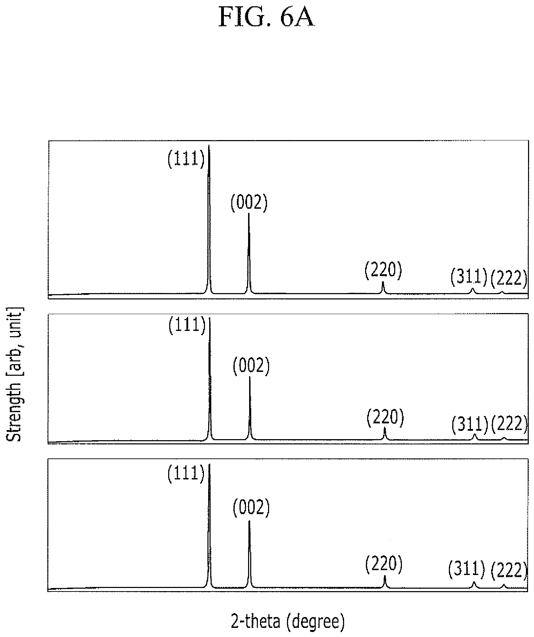

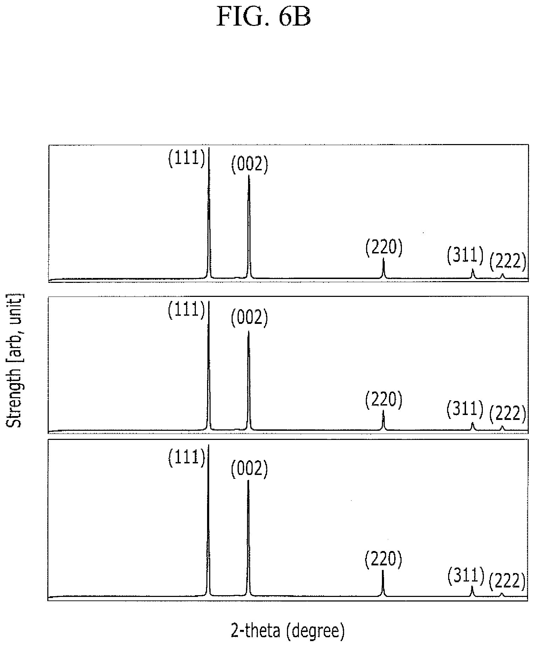

FIG. 6A illustrates a graph showing an X-ray diffraction profile or pattern of a negative uncoated region according to an embodiment. FIG. 6B illustrates a graph showing an X-ray diffraction profile or pattern of a negative coated region according to an embodiment.

FIGS. 6A and 6B show results of analyzing crystals of the negative current collector 121 in the negative uncoated region 12a and the negative coated region 12b by using X-ray diffraction after hammering the copper negative current collector 121 in the negative uncoated region 12a by using ultrasonic vibrations.

In the present embodiment, the negative current collector 121 made of copper is described as an example, and each FWHM (full width at half maximum) of the peaks of directions 111 and 002 are exemplified. However, the embodiments are not limited thereto, and the FWHM of the peak of direction 111 may correspond to the FWHM of the maximum peak of an electrode substrate and the FWHM of the peak of direction 002 may correspond to the FWHM of the second largest peak of the electrode substrate.

**[Table 1]**

| I 111/I 002 | Coated region | Hammering-processed uncoated region |
|---|---|---|
| Sample 1 | 1.28 | 1.90 |
| Sample 2 | 1.32 | 1.87 |
| Sample 3 | 1.23 | 1.79 |
| Average | 1.28 | 1.85 |

Table 1 shows a comparison between the FWHM of the peaks of direction 111 and the FWHM of the peaks of direction 002, shown in FIGS. 6A and 6B of the negative current collector 121 in the negative uncoated region 12a and the negative coated region 12b.

In Table 1, the hammering (using ultrasonic vibrations) was performed with a frequency of 10 kHz at a pressure of 0.6 MPa and a moving speed of the negative current collector 121 was 5 m/min.

As shown in Table 1, the average ratio of the FWHM of of the peak of direction 111 to the FWHM of the peak of direction 002 of the negative current collector 121 in the negative uncoated region 12a according to the present embodiment was 1.85. The average ratio of the FWHM of of the peak of direction 111 to the FWHM of the peak of direction 002 of the negative current collector 121 in the negative coated region 12b was 1.28.

For example, both the FWHM's of the peaks of direction 111 and direction 002 were reduced due to the hammering using ultrasonic vibrations, but the FWHM of the peak of direction 002 was reduced to a greater degree.

The ratio of I 111/I 002 (i.e., a ratio of the FWHM of of the peak of direction 111 to the FWHM of the peak of direction 002 of the negative current collector 121 in the negative uncoated region 12a) may be about 1.4 to about 2.0. Maintaining the ratio of I 111/I 002 at about 1.4 or greater may help ensure that the change in crystal orientation is sufficient, thereby preventing curving of the stretched negative uncoated region. Maintaining the ratio of I 111/I 002 at about 2.0 or less may help ensure that the change in crystal orientation is not too large, thereby preventing tearing of the negative uncoated region.

Further, in comparing the FWHM ratios of the peaks of the negative current collector 121 in the negative uncoated region 12a and the negative coated region 12b, the ratio of I 111/I 002 of the negative current collector 121 in the negative uncoated region 12a may be larger than the ratio of I 111/I 002 in the negative coated region 12b. When the ratio of the FWHM of the maximum peak : the FWHM of the second largest peak of the negative current collector 121 in the negative uncoated region 12a is increased (e.g., due to a change in crystal orientation), a length of the negative current collector 121 in the negative uncoated region 12a may be increased, and the stretching ratio is increased in a lengthwise direction of the negative current collector 121 in the negative uncoated region 12a, thereby preventing the negative electrode from being curved.

The ratio of I 111/I 002 of the negative current collector 121 in the negative uncoated region 12a may be about 1.3 to about 1.6 times the ratio of I 111/I 002 of the negative current collector 121 in the negative coated region 12b.

One method of increasing the stretching ratio or engineering strain of the negative current collector in the uncoated region is to perform an annealing process. If the annealing is performed to increase the stretching ratio or engineering strain, an oxide film may be formed on a surface of the negative current collector in the uncoated region during heat treatment, leading to an undesirable increase in resistance. For example, in the case of copper, an oxide film may be easily formed due to some moisture or a rise in temperature under a general atmospheric condition. Thus, the oxide film formed as above may be eluted inside the rechargeable battery and thus may serve as a by-product during charging and discharging, which may adversely affect a cycle-life, safety, and the like. Further, in the annealing, when a substrate, e.g., an electrolytic copper foil with little internal stress, is used, a physical property thereof may not be changed and thus it may be difficult to prevent an electrode from being curved.

Another method of stretching the negative current collector in the uncoated region is to roll using a roller. However, when rolling with the roller, a crack may be generated due to a stretching deviation on a boundary surface between a rolled portion and a non-rolled portion. As a result, a current path may be disconnected. Furthermore, when rolling even the coated region, a mixture density may be changed and thus the active material may be eliminated. In addition, an ultra high pressure hydraulic cylinder may be required for rolling, and it may be difficult to control a pressure of the hydraulic cylinder.

According to the embodiments, when the hammering using ultrasonic vibrations is applied, the negative current collector in the uncoated region may be intermittently stretched by minute impact, thereby preventing the undesirable generation of a crack. In addition, the negative current collector in the uncoated region may be stretched and simultaneously, a stretching ratio of the negative current collector in the uncoated region may be increased, thereby preventing the electrode from being curved.

Referring to FIG. 7, the positive electrode 11 according to an embodiment may include the positive current collector 112 and the positive active material layer 113 on surfaces of the positive current collector 112. For example, the positive current collector 112 may include the positive coated region 11b (where an active material is coated) and the positive uncoated region 11a (free of active material).

The positive current collector 112 may be formed of, e.g., aluminum, and may have a plate shape that is elongated in one direction. The positive active material layer may include, e.g., LiCoO₂, LiMnO₂, LiNiO₂, or the like, a conductive agent, a binder, or the like. The positive active material layer 113 may be coated on the positive current collector 112 or may be attached by a lamination method.

The positive current collector 112 in the positive uncoated region 11a may be stretched by hammering using ultrasonic vibrations. As a result, an average thickness of the positive current collector 112 in the positive uncoated region 11a may be smaller than an average thickness of the positive current collector 112 in the positive coated region 11b.

A thickness of the positive current collector 112 in the positive uncoated region 11a may be about 80% to about 95% of the thickness of the positive current collector 112 in the positive electrode coating ratio 11b.

As the crystal orientation of the positive uncoated region 11a is changed by the hammering using ultrasonic vibration, the FWHM of a maximum peak and the FWHM of a second largest peak (according to X-ray diffraction analysis) of the positive current collector 112 in the positive uncoated region 11a may be smaller than the FWHM of a maximum peak and the FWHM of a second largest peak (according to the X-ray diffraction analysis) of the positive current collector 112 in the positive coated region 11b.

For example, the ratio of (FWHM of maximum peak)/(FWHM of second largest peak) of the positive current collector 112 in the positive uncoated region 11a is larger than a ratio of (FWHM of maximum peak):(FWHM of second largest peak) of the positive current collector 112 in the positive coated region 11b. The ratio of (FWHM of maximum peak)/(FWHM of second largest peak) of the positive current collector 112 in the positive uncoated region 11a may be about 1.3 to about 1.6 times the ratio of (FWHM of maximum peak):(FWHM of second largest peak) of the positive current collector 112 in the positive coated region 11b due to hammering using ultrasonic vibrations.

When the ratio of the FWHM of the maximum peak and the FWHM of the second largest peak of the positive current collector 112 in the positive uncoated region 11a is increased (e.g., due to a change in crystal orientation), the length of the positive uncoated region 11a may be increased, and the stretching ratio or engineering strain is increased in a lengthwise direction of the positive uncoated region 11a, thereby helping to prevent the negative electrode from being curved.

In an implementation, in the positive current collector 112 in the positive uncoated region 11a, the ratio of (FWHM of maximum peak)/(FWHM of second largest peak), e.g., a ratio of the FWHM of the maximum peak and the FWHM of the second largest peak of the positive current collector 112 in the positive uncoated region 11a, may be about 1.4 to about 2.0.

As described above, when the positive current collector 112 in the positive uncoated region is hammered using ultrasonic vibrations, the crystal orientation of the positive current collector 112 in the positive uncoated region may be changed, thereby helping to prevent the positive electrode from being curved in the process of rolling or pressing the positive coated region.

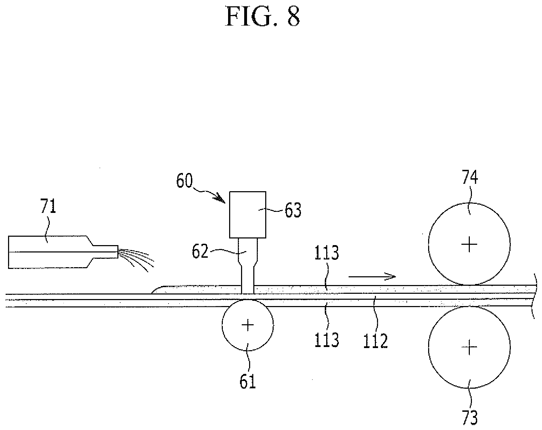

FIG. 8 illustrates a diagram showing a fabricating method of an electrode according to an embodiment.

In FIG. 8, a positive electrode is described as an example, but the embodiments are not limited thereto, and a negative electrode may fabricated by the same method.

A fabrication method of a positive electrode according to an embodiment may include a step of forming a positive active material layer 113 on a positive current collector 112, a step of vibration-hammering a preliminary positive uncoated region (free of the positive active material layer 113) to form a positive uncoated region 11a, and a step of pressing a coated region (where the positive active material layer 113 is coated).

In the step of forming the positive active material layer 113, the positive active material layer 113 may be formed on a part of the positive current collector 112 by using a coater 71 discharging an active material. The positive active material layer 113 may be simultaneously formed on both surfaces of the positive current collector 112. Or as shown in FIG. 8, after the positive active material layer 113 is formed on one surface of the positive current collector 112, the positive active material layer 113 may be sequentially formed on the other surface.

In the vibration-hammering step, the preliminary positive uncoated region may be hammered by using an ultrasonic vibration hammering device 60 to form the positive uncoated region 11a. The ultrasonic vibration hammering device 60 may include an anvil 61 having a cylindrical roller structure, a horn 62 hammering the preliminary positive uncoated region, that moves on the anvil 61, using ultrasonic vibrations, and an ultrasonic vibration generator 63 applying ultrasonic vibrations to the horn 62.

The preliminary positive uncoated region may move on the rotating anvil 61 and the horn 62 may vibration-hammer the preliminary positive uncoated region vertically while vibrating at an ultrasonic wave frequency. When the positive current collector 112 moves while being hammered, hammering using ultrasonic vibrations may be continuously performed and in this process, the positive uncoated region 11a may be formed and stretched.

In an implementation, the ultrasonic vibrations may have a frequency of about 8 to about 12 kHz. In an implementation, the horn 62 may strike the preliminary uncoated region with a pressure of about 0.4 to about 0.8 MPa. In an implementation, the preliminary uncoated region may be passed along the anvil 61 at a speed of about 3 m/min to about 7 m/min.

In the pressing step, the positive coated region 11b may be pressed using pressing rollers 73 and 74 and during the pressing process, the positive coated region 11b may be stretched. As the positive coated region 11b is stretched, the positive uncoated region 11a may be stretched together therewith. The ultrasonic vibration hammering processed positive uncoated region 11a may be easily stretched even by a small force. Thus, the positive electrode may be prevented from being curved.

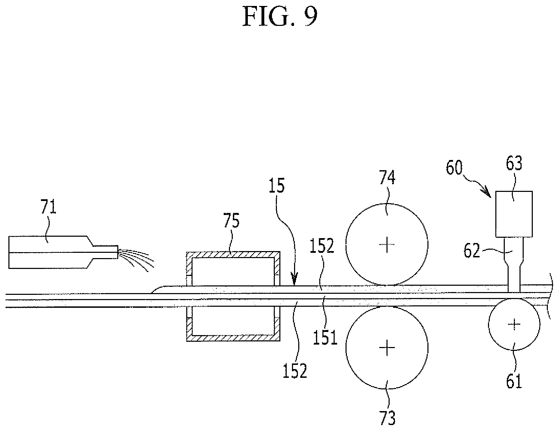

FIG. 9 illustrates a diagram showing a fabricating method of an electrode according to an embodiment.

Referring to FIG. 9, a fabricating method of an electrode according to an embodiment will be described. In the present embodiment, an electrode 15 may refer to a positive electrode or a negative electrode that are applied to a rechargeable battery.

The fabricating method of the electrode 15 according to the present embodiment may include a step of forming an active material layer 152 on a current collector 151, a step of drying an electrode where the active material layer 152 is formed, a step of pressing a coated region (where the active material layer 152 is coated), and a step of vibration-hammering a preliminary uncoated region (free of the active material layer 152) to form the uncoated region.

In the step of forming the active material layer 152, the active material layer 152 may be formed on a part of the current collector 151 by using a coater discharging an active material. The active material layer 152 may be simultaneously formed on both surfaces of the current collector 151. Or as shown in FIG. 9, after the active material layer 152 is formed on one surface of the current collector 151, the active material layer 152 may be sequentially formed on the other surface.

In the drying step, the electrode 15 may be moved into a drying path 75 to dry a volatile liquid remaining inside the active material layer.

In the pressing step, the coated region may be pressed using pressing rollers 73 and 74 and during the pressing process, the coated region may be stretched. As the coated region is stretched, tensile stress may be applied to the preliminary uncoated region.

In the vibration-hammering step, after the pressing step, the preliminary uncoated region may be hammered using an ultrasonic vibration hammering device 60. The ultrasonic vibration hammering device 60 may include an anvil 61 having a cylindrical roller structure, a horn 62 hammering the preliminary uncoated region, that moves on the anvil 61, using ultrasonic vibrations, and an ultrasonic vibration generator 63 applying ultrasonic vibrations to the horn 62.

The preliminary uncoated region may move on the rotating anvil 61, and the horn 62 may vibration-hammer the preliminary uncoated region vertically while vibrating at an ultrasonic wave frequency. When the current collector 112 moves while being hammered, hammering using ultrasonic vibrations may be continuously performed. In this process, the preliminary uncoated region may be stretched to form the uncoated region and thus tensile stress applied to the uncoated region may be removed.

In an implementation, the ultrasonic vibrations may have a frequency of about 8 to about 12 kHz. In an implementation, the horn 62 may strike the preliminary uncoated region with a pressure of about 0.4 to about 0.8 MPa. In an implementation, the preliminary uncoated region may be passed along the anvil 61 at a speed of about 3 m/min to about 7 m/min.

In the present embodiment, the vibration-hammering step may be performed after the pressing step, but the embodiments are not limited thereto. For example, the vibration-hammering step may be performed together with the pressing step.

By way of summation and review, after being coated with the active material, the positive electrode and the negative electrode may be pressed flatly by a press or the like. The coated region may be pressed by the press to be stretched, but the uncoated region may hardly receive any pressing force and thus may not be stretched. As described above, when stretching ratios or engineering strain of the coated region and the uncoated region are different from each other, the electrode may warp. If the electrode warps, an error may occur in the process of winding the electrode (that is elongated in one direction), leading to a reduction in productivity and charging and discharging efficiency.

The embodiments provide a rechargeable battery including an electrode in which undesirable curvature thereof is reduced and/or prevented.

According to an embodiment, the current collector in the uncoated region may be vibration-hammered to be stretched, and a stretching ratio of the current collector in the uncoated region may be increased, thereby preventing the electrode from warping.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode for a rechargeable battery (101), the electrode (11, 12) comprising a sheet-like current collector (112, 121) having a coated region (11b, 12b) and an uncoated region (11a, 12a) adjacent the coated region (11b, 12b), wherein in the coated region an active material layer (113, 122) is provided on the current collector (112, 121) and in the uncoated region (11a, 12a) the collector (112, 121) is free of the active material layer (113, 122), wherein the current collector (112, 121) is **characterized by** an x-ray diffraction pattern in which a ratio of the FWHM of a largest peak:the FWHM of a second largest peak of the current collector (112, 121) in the uncoated region (11a, 12a) is greater than a ratio of the FWHM of a largest peak:the FWHM of a second largest peak of the current collector (112, 121) in the coated region (11b, 12b), wherein the uncoated region is a hammered region.

2. An electrode according to claim 1, wherein the collector has a sheet-like shape and the coated region (11b, 12b) of the current collector (112, 121) excluding the active material layer (113, 122) is thicker than the uncoated region (11a, 12a), the thickness being measured perpendicular to the plane of the sheet.

3. An electrode according to either of claims 1 or 2, wherein the current collector (112, 121) has a sheet-like shape and the uncoated region (11a, 12a) is provided as a strip along an edge of the sheet.

4. An electrode according to any preceding claim, wherein the ratio of the FWHM of the largest peak:the FWHM of a second largest peak of the current collector (112, 121) in the uncoated region (11a, 12a) is from 1.3 to 1.6 times greater than the ratio of the FWHM of the largest peak:the FWHM of the second largest peak of the current collector (112, 121) in the coated region (11b, 12b).

5. An electrode according to any preceding claim, wherein the ratio of the FWHM of the largest peak:the FWHM of the second largest peak of the current collector (112, 121) in the uncoated region (11a, 12a) is from 1.4 to 2.0.

6. An electrode assembly (10) comprising a first electrode (11), a second electrode (12), and a separator (13) between the first electrode (11) and the second electrode (12); wherein at least one of the first (11) and/or second (12) electrodes is an electrode according to any preceding claim.

7. A rechargeable battery (101) comprising: an electrode assembly (10) according to claim 6, a case (30) having space to house the electrode assembly (10); and a cap plate (25) covering an opening in the case.

8. A method of fabricating an electrode, the method comprising:
providing a sheet-like current collector (112, 121);
coating a region of the current collector (112, 121) with an active material layer (113, 122) to form a coated region (11b, 12b) and an uncoated region (11a, 12a); and hammering the uncoated region (11a, 12a),
wherein the current collector (112, 121) is **characterized by** an x-ray diffraction pattern in which a ratio of the FWHM of a largest peak:the FWHM of a second largest peak of the current collector (112, 121) in the uncoated region (11a, 12a) is greater than a ratio of the FWHM of a largest peak:the FWHM of a second largest peak of the current collector (112, 121) in the coated region (11b, 12b).

9. A method according to claim 8, comprising hammering the uncoated region (11a, 12a) after pressing of the coated region (11b, 12b).

10. A method according to claim 8, comprising hammering the uncoated region (11a, 12a) during pressing of the coated region (11b, 12b).

11. A method according to any of claims 8 to 10, wherein the hammering is vibration hammering.

12. A method according to claim 11, wherein the vibration hammering uses ultrasonic vibrations.

13. A method according to either of claims 9 or 10, wherein during vibration hammering the uncoated region (11a, 12a) is passed over an anvil (61) having a roller structure.

14. A method according to claim 13, wherein the uncoated region (11a, 12a) is passed over the anvil (61) at a speed from 3 m/min to 7 m/min.

15. A method according to any of claims 8 to 14, wherein during hammering, the collector (112, 121) is struck with a pressure of 0.4 to 0.8MPa.

## Patentansprüche

1. Elektrode für eine wiederaufladbare Batterie (101), wobei die Elektrode (11, 12) einen plattenähnlichen Stromableiter (112, 121) umfasst, der einen beschichteten Bereich (11b, 12b) und einen an den beschichteten Bereich (11b, 12b) angrenzenden unbeschichteten Bereich (11a, 12a) aufweist, wobei in dem beschichteten Bereich eine Aktivmaterialschicht (113, 122) auf dem Stromableiter (112, 121) bereitgestellt ist und in dem unbeschichteten Bereich (11a, 12a) der Ableiter (112, 121) frei von der Aktivmaterialschicht (113, 122) ist, wobei der Stromableiter (112, 121) durch ein Röntgenbeugungsmuster gekennzeichnet ist, bei dem ein Verhältnis der Halbwertsbreite eines höchsten Peaks zu der Halbwertsbreite eines zweithöchsten Peaks des Stromableiters (112, 121) in dem unbeschichteten Bereich (11a, 12a) größer ist als ein Verhältnis der Halbwertsbreite eines höchsten Peaks zu der Halbwertsbreite eines zweithöchsten Peaks des Stromableiters (112, 121) in dem beschichteten Bereich (11b, 12b), wobei der unbeschichtete Bereich ein gehämmerter Bereich ist.

2. Elektrode nach Anspruch 1, wobei der Ableiter eine plattenähnliche Form aufweist und der beschichtete Bereich (11b, 12b) des Stromableiters (112, 121) ohne die Aktivmaterialschicht (113, 122) dicker als der unbeschichtete Bereich (11a, 12a) ist, wobei die Dicke senkrecht zur Plattenebene gemessen wird.

3. Elektrode nach Anspruch 1 oder 2, wobei der Stromableiter (112, 121) eine plattenähnliche Form aufweist und der unbeschichtete Bereich (11a, 12a) als ein Streifen entlang einer Kante der Platte bereitgestellt ist.

4. Elektrode nach einem der vorangehenden Ansprüche, wobei das Verhältnis der Halbwertsbreite des höchsten Peaks zu der Halbwertsbreite eines zweithöchsten Peaks des Stromableiters (112, 121) in dem unbeschichteten Bereich (11a, 12a) 1,3 bis 1,6 mal größer ist als das Verhältnis der Halbwertsbreite des höchsten Peaks zu der Halbwertsbreite des zweithöchsten Peaks des Stromableiters (112, 121) in dem beschichteten Bereich (11b, 12b).

5. Elektrode nach einem der vorangehenden Ansprüche, wobei das Verhältnis der Halbwertsbreite des höchsten Peaks : Halbwertsbreite des zweithöchsten Peaks des Stromableiters (112, 121) in dem unbeschichteten Bereich (11a, 12a) einen Wert von 1,4 bis 2,0 aufweist.

6. Elektrodenanordnung (10), umfassend: eine erste Elektrode (11), eine zweite Elektrode (12), und einen Separator (13) zwischen der ersten Elektrode (11) und der zweiten Elektrode (12); wobei mindestens eine der ersten (11) und/oder der zweiten (12) Elektroden eine Elektrode nach einem der vorangehenden Ansprüche ist.

7. Wiederaufladbare Batterie (101), umfassend: eine Elektrodenanordnung (10) nach Anspruch 6, ein Gehäuse (30), welches über Raum zur Aufnahme der Elektrodenanordnung (10) verfügt; und eine Deckelplatte (25), die eine Öffnung in dem Gehäuse bedeckt.

8. Verfahren zum Herstellen einer Elektrode, das Verfahren umfassend:
Bereitstellen eines plattenähnlichen Stromableiters (112, 121);
Beschichten eines Bereichs des Stromableiters (112, 121) mit einer Aktivmaterialschicht (113, 122), um einen beschichteten Bereich (11b, 12b) und einen unbeschichteten Bereich (11a, 12a) auszubilden; und
Hämmern des unbeschichteten Bereichs (11a, 12a),
wobei der Stromableiter (112, 121) durch ein Röntgenbeugungsmuster gekennzeichnet ist, bei dem ein Verhältnis der Halbwertsbreite eines höchsten Peaks zu der Halbwertsbreite eines zweithöchsten Peaks des Stromableiters (112, 121) in dem unbeschichteten Bereich (11a, 12a) größer ist als ein Verhältnis der Halbwertsbreite eines höchsten Peaks : Halbwertsbreite eines zweithöchsten Peaks des Stromableiters (112, 121) in dem beschichteten Bereich (11b, 12b).

9. Verfahren nach Anspruch 8, umfassend: Hämmern des unbeschichteten Bereichs (11a, 12a) nach dem Pressen des beschichteten Bereichs (11b, 12b).

10. Verfahren nach Anspruch 8, umfassend: Hämmern des unbeschichteten Bereichs (11a, 12a) während des Pressens des beschichteten Bereichs (11b, 12b).

11. Verfahren nach einem der Ansprüche 8 bis 10, wobei das Hämmern ein Vibrationshämmern ist.

12. Verfahren nach Anspruch 11, wobei das Vibrationshämmern Ultraschallschwingungen verwendet.

13. Verfahren nach einem der Ansprüche 9 oder 10, wobei der unbeschichtete Bereich (11a, 12a) während des Vibrationshämmerns über einen Gegenhalter (61) geführt wird, der eine Walzenstruktur aufweist.

14. Verfahren nach Anspruch 13, wobei der unbeschichtete Bereich (11a, 12a) bei einer Geschwindigkeit von 3 m/min bis 7 m/min über den Gegenhalter (61) geführt wird.

15. Verfahren nach einem der Ansprüche 8 bis 14, wobei der Ableiter (112, 121) während des Hämmerns mit einem Druck von 0,4 bis 0,8 MPa geschlagen wird.

## Revendications

1. Électrode pour une batterie rechargeable (101), l'électrode (11, 12) comprenant un collecteur de courant en forme de feuille (112, 121) ayant une région recouverte (11b, 12b) et une région non recouverte (11a, 12a) adjacente à la région recouverte (11b, 12b), où, dans la région recouverte, une couche de matière active (113, 122) est prévue sur le collecteur de courant (112, 121) et, dans la région non recouverte (11a, 12a), le collecteur (112, 121) est dépourvu de couche de matière active (113, 122), dans laquelle le collecteur de courant (112, 121) est **caractérisé par** un motif de diffraction de rayon X dans lequel un rapport LTMH du plus grand pic:LTMH du second plus grand pic du collecteur de courant (112, 121) dans la région non recouverte (11a, 12a) est supérieur à un rapport LTMH du plus grand pic:LTMH du second plus grand pic du collecteur de courant (112, 121) dans la région recouverte (11b, 12b), dans laquelle la région non recouverte est une région martelée.

2. Électrode selon la revendication 1, dans laquelle le collecteur a une forme de feuille et la région recouverte (11b, 12b) du collecteur de courant (112, 121) excluant la couche de matière active (113, 122) est plus épaisse que la région non recouverte (11a, 12a), l'épaisseur étant mesurée perpendiculairement au plan de la feuille.

3. Électrode selon les revendications 1 ou 2, dans laquelle le collecteur de courant (112, 121) a une forme de feuille et la région non recouverte (11a, 12a) est prévue sous la forme d'une bande le long d'un bord de la feuille.

4. Électrode selon l'une quelconque des revendications précédentes, dans lequel le rapport LTMH du plus grand pic:LTMH du second plus grand pic du collecteur de courant (112, 121) dans la région non recouverte (11a, 12a) est de 1,3 à 1,6 fois supérieur au rapport LTMH du plus grand pic:LTMH du second plus grand pic du collecteur de courant (112, 121) dans la région non recouverte (11b, 12b).

5. Électrode selon l'une quelconque des revendications précédentes, dans laquelle le rapport LTMH du plus grand pic:LTMH du second plus grand pic du collecteur de courant (112, 121) dans la région non recouverte (11a, 12a) est de 1,4 à 2,0.

6. Ensemble d'électrodes (10) comprenant une première électrode (11), une seconde électrode (12) et un séparateur (13) entre la première électrode (11) et la seconde électrode (12) ; dans lequel au moins l'une des première (11) et/ou seconde (12) électrodes est une électrode selon l'une quelconque des revendications précédentes.

7. Batterie rechargeable (101) comprenant : un ensemble d'électrodes (10) selon la revendication 6, un boîtier (30) ayant un espace pour loger l'ensemble d'électrodes (10) ; et une plaque formant capuchon (25) recouvrant une ouverture dans le boîtier.

8. Procédé pour fabriquer une électrode, le procédé comprenant les étapes consistant à :
prévoir un collecteur de courant en forme de feuille (112, 121) ;
recouvrir une région du collecteur de courant (112, 121) avec une couche de matière active (113, 122) pour former une région recouverte (11b, 12b) et une région non recouverte (11a, 12a) ; et
marteler la région non recouverte (11a, 12a),
dans lequel le collecteur de courant (112, 121) est **caractérisé par** un motif de diffraction de rayon X dans lequel un rapport LTMH du plus grand pic:LTMH du second plus grand pic du collecteur de courant (112, 121) dans la région non recouverte (11a, 12a) est supérieur à un rapport LTMH du plus grand pic:LTMH du second plus grand pic du collecteur de courant (112, 121) dans la région recouverte (11b, 12b).

9. Procédé selon la revendication 8, comprenant l'étape consistant à marteler la région non recouverte (11a, 12a) après avoir comprimé la région recouverte (11b, 12b) .

10. Procédé selon la revendication 8, comprenant l'étape consistant à marteler la région non recouverte (11a, 12a) pendant la compression de la région recouverte (11b, 12b).

11. Procédé selon l'une quelconque des revendications 8 à 10, dans lequel le martelage est un martelage par vibrations.

12. Procédé selon la revendication 11, dans lequel le martelage par vibrations utilise des vibrations ultrasonores.

13. Procédé selon l'une des revendications 9 ou 10, dans lequel, pendant le martelage par vibrations, la région non recouverte (11a, 12a) passe sur une enclume (61) ayant une structure de rouleau.

14. Procédé selon la revendication 13, dans lequel la région non recouverte (11a, 12a) passe sur l'enclume (61) à une vitesse de 3 m/min à 7 m/min.

15. Procédé selon l'une quelconque des revendications 8 à 14, dans lequel, pendant le martelage, le collecteur (112, 121) est frappé avec une pression de 0,4 à 0,8 MPa.
